# EUROPEAN PATENT APPLICATION

(11) **EP 1 489 824 A2**
(43) Date of publication of application: **22.12.2004**
(21) Application number: 04014144.2
(22) Date of filing: 16.06.2004
(51) Int. Cl.: H04M 1/725

(54) **Security system and cordless phone apparatus**

(30) Priority: 16.06.2003 JP 2003170298
(71) Applicant: MATSUSHITA ELECTRIC INDUSTRIAL CO., LTD., Kadoma-shi, Osaka 571-8501 (JP)
(72) Inventor: Goto, Tatuhiro, Kasuga-shi Fukuoka 813-0812 (JP); Ogata, Yoshiyuki, Tosu-shi saga 841-0034 (JP); Nakamura, Kenji, Fukouka 811-1311 (JP)
(74) Representative: Grünecker, Kinkeldey, Stockmair & Schwanhäusser Anwaltssozietät

(57) **Abstract**

This invention transmits emergency information in preference to a handset with high priority, in a security system which uses a cordless phone apparatus with multi-handsets, which is connected to a security control device which detects fire and an intruder by a sensor.

In a cordless phone apparatus (228) with multi-handsets, a base unit (227) is equipped with an emergency reporting priority table (226) including priority information for determining a communication sequence of emergency information to a plurality of handsets (200), at the time of occurrence of an emergency, and the base unit (227) determines a reporting sequence to each handset on the basis of this table at the time of reporting an emergency.

The emergency reporting priority table (226) can be set/changed on a timely basis, in accordance with an allocation site etc. of a handset.

For example, such a position that the pertinent handset was placed is specified by a charging cradle to which charging was carried out in the last instance, and a priority sequence is determined in accordance with position priority of the emergency reporting priority table.

Or, priority is given to a handset which is located at a dangerous allocation site, in accordance with a type of an alarm which is reported by a sensor and time that it was generated.

## Description

### BACKGROUND OF THE INVENTION

### 1. Field of the Invention

This invention relates to a security system which carries out sequence control, in case that occurrence of an emergency situation is informed sequentially to a plurality of handsets, and a cordless phone apparatus with multi-handsets, which is used in the system.

### 2. Description of the related art

In these years, a security control box type security system, which manages a plurality of sensors disposed in a home in a lump, has been becoming widely used in response to. changes in social environments.

Furthermore, by combining this security system with a cordless phone apparatus with multi-handsets, which has been widely used, information from a security system is displayed on a plurality of handsets, or a handset has an emergency reporting function, and thereby, it has become to be able to make use of a security system more effectively.

Hereinafter, with reference to the drawings, a cordless phone apparatus which is used in a conventional security system will be described.

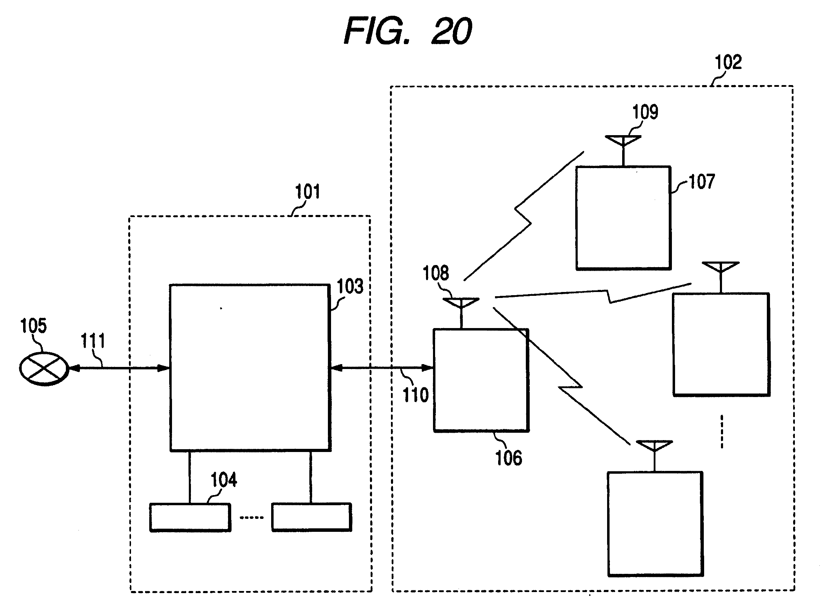

In Fig.20, 101 designates a security box type security apparatus, and is composed of a security control device 103 which is connected to a plurality of sensors 104, which were disposed in a home, with or without wires. 102 designates a cordless phone 102 with multi-handsets, which is connected to the security control device 103 through a communication path 110. This cordless phone 102 is of a multi-handset type which is composed of a base unit 106 and a plurality of handsets 107 (here, N units), and charging cradles (not shown), and the base unit 106 and a plurality of handsets 107 have antennas 108 and 109, respectively, and establish communication by air. The security control device 103 is connected to a public line network 105.

An operation of the conventional security system which was configured as above is as follows. In case that the sensor 104 detected an emergency situation, an emergency signal thereof is firstly communicated to the security control device 103. The security control device 103 informs occurrence of the emergency situation to a central security center or a public security division through a telephone line 111 by way of the public line network.

Also, therewith, the security control device 103 communicates such information that an emergency situation was occurred to the base unit 106 of the cordless phone apparatus 102 through the communication path 110. The base unit 106 communicates this information to all or a part of the existing plural handsets 107 through wireless communication paths, and the handsets 107, which received the information, display it visually or acoustically. And, a sequence of distributing information at this time is determined in advance fixedly with respect to each handset 107 (or each handset group).

In the meantime, in case that sequential information distribution from the base unit to the handsets is necessary, such as a case of streaming a prerecorded emergency message from the base unit to the handsets, and a case of carrying out relatively long nonfinite form display, a procedure for switching a wireless communication path between the handsets (or handset groups) becomes necessary. However, in information distribution by use of. a wireless communication path, communication tends to become unstable due to ambient. surrounding such as positions of respective handsets, radio wave noises etc. and therefore, in general, it takes time to switch a wireless communication path. On this account, in case that a distributing sequence of information is determined fixedly to handsets (or handset group) as in the prior art, it takes time to establish a wireless communication path to a certain handset (or handset group).

Therefore, there occurs such a problem that information distribution to handsets (or handset groups) that follow it gets delayed. This is resulted from such a physical restriction that the number of wireless communication paths, which can be established between a base unit - handsets simultaneously, is generally smaller than the number of all handsets, and is a problem which can not be solved unless a sufficient number of wireless communication paths are provided.

However, in a security system, there is such a case that delay of notification of emergency information involves human lives, and some sort of an improvement plan is necessary.

In addition, in a Japanese patent laid-open publication: JP-A-07-222246, disclosed is an emergency priority calling system which relates to a simplified land mobile wireless phone system, and which gives assurance of connection as much as possible to a priority mobile unit even in case of an emergency situation. That is, it is such a thing that, in a normal time state mode in which each subscriber mobile unit is capable.of calling with no restriction, types of a priority mobile unit and a general mobile unit are set up in each subscriber mobile unit, and in a emergency time state mode, it is controlled to connect only a calling of the priority mobile unit.

### SUMMARY OF THE INVENTION

This invention aims, in view of the above-described existing problem, to provide a cordless phone apparatus with multi-handsets, which is used in a security system characterized in that emergency information is communicated in preference to a handset with high emergency level.

A first invention which solves the above-described existing problem has, in a security system for detecting fire and an intruder by a sensor etc. and reporting, a plurality of handsets, and at least one base unit which is connected to these handsets by a wireless communication path, and the base unit is equipped with an emergency reporting priority table which includes priority information for determining a communication sequence of emergency information to a plurality of handsets at the time of occurrence, and has such an operation that it communicates emergency information in preference to a handset which requires emergency, and it is possible to shorten delay of emergency information distribution.

In a second invention, the handset is equipped with means for obtaining charge number information from a charging cradle which has inherent charge number information, and means for transmitting the obtained charge number information to the base unit. Also, the base unit is equipped with a position priority conversion table in which the charge number and position priority are paired, and is a thing which was designed to set up the positionpriority conversion table in such a manner that priority is determined in accordance with such a position that each charging cradle was placed, and, on the basis of charge number information which was sent from a handset to the base unit, to specify such a position that the pertinent handset was disposed, and to be able to judge priority. By this, at the time when an emergency situation was occurred, to a handset for which priority information of the emergency reporting priority table is not set up, such a position that the pertinent handset was disposed is specified by a charging cradle in which charging was carried out in the last instance, and it is possible to determine a priority sequence in accordance with position priority of the emergency reporting priority table, and therefore, it has such an operation that, regardless of a change of a allocation site due to a movement of a handset, it is possible to shorten delay of an emergency report to an allocation side which requires emergency.

A third invention is such a thing that the base unit was designed to give priority to a handset which is located at a dangerous allocation site in accordance with a type of alarm that a sensor will report; or time when the alarm was generated, on the occasion of determining an emergency reporting sequence on the basis of position priority as allocation information of handsets in the emergency reporting priority table, and has such an operation that it is possible to shorten delay of an emergency report to an allocation site which requires emergency in accordance with the type of alarm, or in accordance with alarm generation time.

A fourth invention is such a thing that the base unit was designed to increase report priority to handsets in accordance with a current position of a habitant by information of a sensor etc., to a handset for which priority information of the emergency reporting priority table is not set up, and has such an operation that it carries out an emergency report accurately to a handset which requires emergency by taking hold of the latest position of a habitant.

A fifth invention is such a thing that the base unit intends to increase a priority sequence of a handset, to a handset for which priority information of the emergency reporting priority table is not set up, in accordance with a status of a wireless communication path of the base unit and the handset, and has such an operation that reduced is waiting time of a handset which is in a good link state, by leaving over a handset which requires much time for establishing a wireless communication path, so that it becomes possible to report to more handsets in a given amount of time.

A sixth invention is such a thing that the base unit changes a priority sequence of a handset, to a handset for which priority information of the emergency reporting priority table is not set up, in accordance with a state of charging of the handset, and has such an operation that it makes it difficult to occur such a situation that a handset with a fewer remaining amount of a battery is shut off when it is waiting for a report, by leaving over a report to a handset with a larger reaming amount of a battery.

A seventh invention is such a thing that the base unit is equipped with means for recording such final time that communication was carried out in each handset, in the emergency reporting priority table, and at the time of an emergency report to handsets, to a handset for which priority information of the emergency reporting priority table is not set up, a report is carried out in preference to a handset in which there was a call record within predetermined time, in accordance with a record of final call time between respective handsets of the emergency reporting priority table, and has such an operation that it is possible to shorten waiting time of an emergency report to a handset with high possibility of existence of a habitant, by giving priority to a report to a handset which was used most recently.

An eighth invention is such a thing that the base unit controls a time-out period for establishing a wireless communication path of the base unit and the handset, at the time of an emergency report to handsets, on the basis of priority information of the emergency reporting priority table, and has such an operation that, by such a configuration that a handset with high priority establishes a wireless communication path by taking longer time, it makes it difficult to occur such a problem that communication is not carried out even in case of an important handset, and also, it does not increase time which is required for an entire emergency report needlessly, by shortening a time-out period to a handset with low priority.

A ninth invention is such a thing that the handset is equipped with means for canceling an alarm, on the occasion that it received an emergency report from the base unit, and the base unit intends to eliminate unnecessary alarm of the base unit to a handset with low priority, by such a fact that the handset with high priority cancels the alarm, in case that a report based upon priority information of the emergency reporting priority table is an erroneous report and so on, at the time of an emergency report to handsets, and has such an operation that, by such a configuration that alarm canceling is carried out when it could be judged that it is clearly an erroneous report and superfluous alarm reporting is not carried out to other handsets, it is possible to shorten a time limit of a telephone function by a unnecessary emergency report, and also a unnecessary alarm is not given to other habitants.

A tenth invention is such a thing that the handset is equipped with means for canceling an alarm on the occasion that it receives an emergency report from the base unit, and the base unit is equipped with handset identifiers which specify handsets in the emergency reporting priority table, and in case that an alarm was canceled by a handset with high priority, a fact of occurrence and canceling of an erroneous alarm is tried to be informed by giving notice of an identifier of a handset which canceled an alarm, to all handsets, and has such an operation that a habitant can not the fact of occurrence and canceling of the erroneous alarm, and can judge whether it is an allowable suspension process, or abnormality due to malfunction or a unauthorized suspension.

An eleventh invention is such a thing that the base unit informs information of the emergency reporting priority table to all handsets, at the time of an emergency report to handsets, and the handset displays the information of the emergency reporting priority table together with information of other handsets, and has such an operation that it is possible to set up again in case that priority, which is not desired by oneself, was set up, and to immediately find and amend an erroneous setup and a setup which does not meet a state of use, since all habitants can take hold of priority of all handsets.

### BRIEF DESCRIPTION OF THE DRAWINGS

Fig.1 is a block diagram of a cordless phone apparatus with multi-handsets, which is used in a security system which relates to an embodiment 1 of this invention
Fig.2 is ablockdiagramof an emergency reporting priority table of the cordless phone apparatus which is used in the security system which relates to the embodiment 1 of this invention
Fig.3 is a flow chart which shows procedures of emergency report processing in a base unit of the cordless phone apparatus which is used in the security system which relates to the embodiment 1 of this invention
Fig.4 is a block diagram of a cordless phone apparatus which is used in a security system which relates to an embodiment 2 of this invention
Fig. 5 is a block diagram of an emergency reporting priority table of the cordless phone' apparatus which is used in the security system which relates to the embodiment 2 of this invention
Fig. 6 is a block diagram of a priority position conversion table of the cordless phone apparatus which is used in the security system which relates to. the embodiment 2 of this invention
Fig.7 is a view which shows determining procedures of a priority sequence, in case that there are 3 units of cordless phone handsets
Fig. 8 is a view which shows such a status that allocation positions (security areas) of a cordless phone handset 1 and a cordless phone handset 2 were switched
Fig. 9 is a block diagram of a position priority conversion table of a cordless phone apparatus which is used in a security system which relates to an embodiment 3 of this invention
Fig.10 is a block diagram of an emergency reporting priority table of the cordless phone apparatus which is used in the security system which relates to the embodiment 3 of this invention

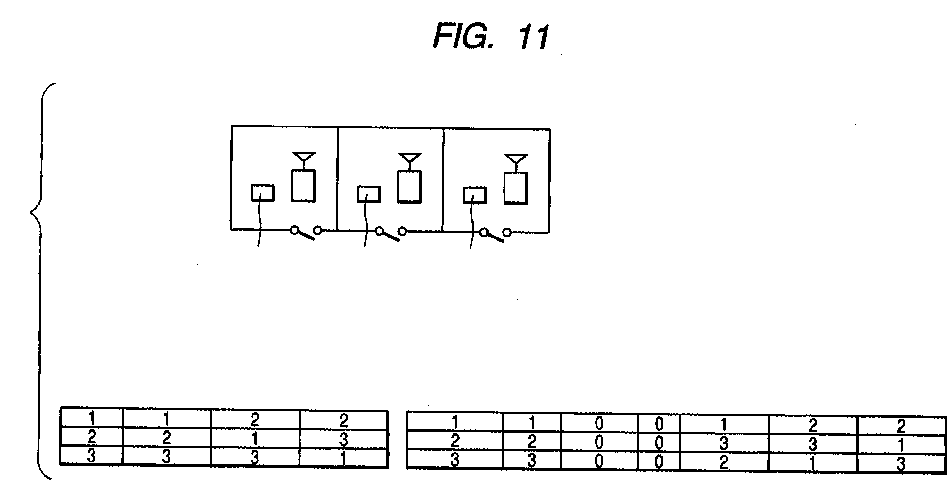

Fig.11 is a view which shows such a case that 3 rooms in a house are equipped with smoke sensors 1~3 for detecting occurrence of fire
Fig. 12 is a block diagramof a position priority conversion table of a cordless phone apparatus which is used in a security system which relates to an embodiment 4 of this invention
Fig.13 is a block diagram of an emergency reporting priority table of the cordless phone apparatus which is used in the security system which relates to the embodiment 4 of this invention
Fig.14 is a block diagram of a cordless phone apparatus with multi-handsets, which is used in a security system which relates to an embodiment 5 of this invention
Fig.15 is a block diagram of an emergency reporting priority table of the cordless phone apparatus which is used in the security system which relates to the embodiment 5 of this invention
Fig.16 is a block diagram of an emergency reporting priority table of a cordless phone apparatus which is used in a security system which relates to an embodiment 6 of this invention
Fig.17 is a block diagram of an emergency reporting priority table of a cordless phone apparatus which is used in a security system which relates to an embodiment 7 of this invention

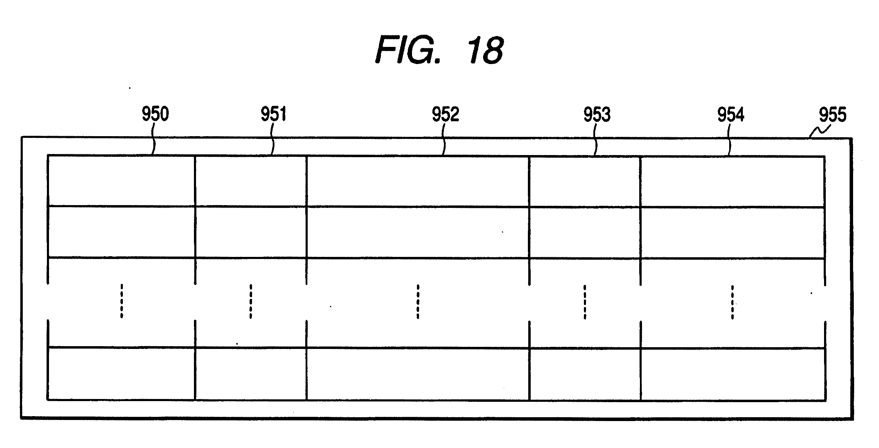

Fig.18 is a block diagram of an emergency reporting priority table of a cordless phone apparatus which is used in a security system which relates to an embodiment 8 of this invention
Fig.19 is a flow chart which shows process procedures in a cordless phone apparatus which is used in a security system which relates to an embodiment 10 of this invention
Fig.20 is_a.view.which explains a configuration of a cordless phone apparatus with multi-handset, which is used in a conventional security system.

### DESCRIPTION OF THE PREFERRED EMBODIMENTS

Hereinafter, embodiments of this invention will be described with reference to the drawings.

### (Embodiment 1)

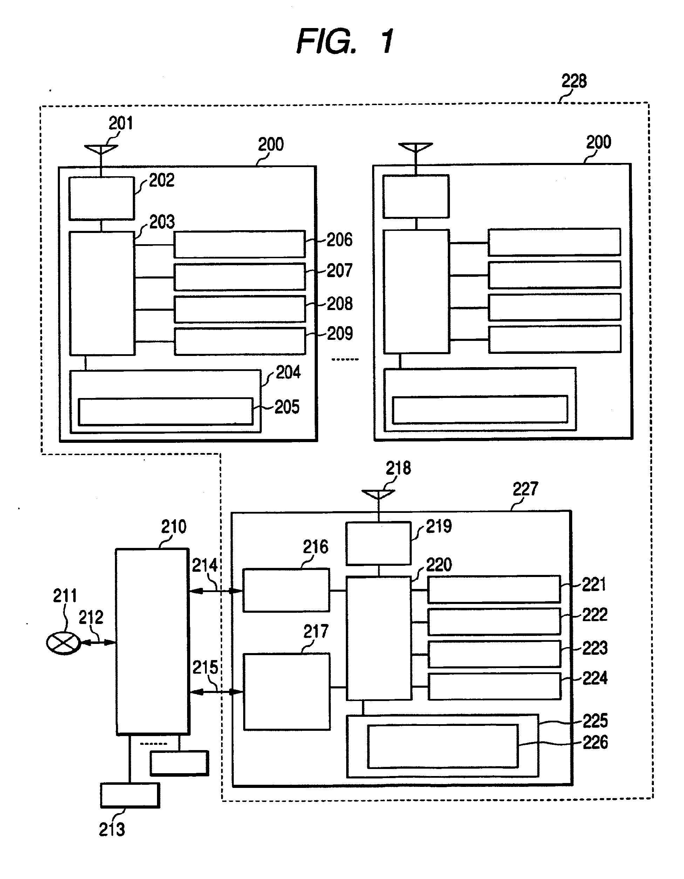

Fig. 1 is ablockdiagramof a security system which relates to an embodiment 1 of this invention, and a cordless phone apparatus with multi-handsets, which is used in this security system. In Fig. 1, the security system has N units of handsets 200, charging cradles (not shown) for charging the handsets 200, a cordless phone apparatus 228 with multi-handsets to which 1 unit of a base unit 227 was connected through a wireless communication path, and a security control part 201 to which a plurality of sensors 213 were connected.

The base unit 227 is connected to the security control part 210 by way of a telephone line 214 and a security signal line 215, and the security control part 210 is connected to a public line network 211 by way of a telephone line 212.

Each of the handsets 200 is composed of an antenna 201, a wireless part 202, a control part 203, a memory part 204 for holding identification information 205, a display part 206, an input part 207, a sound output part 208, and a sound input part 209.

Also, the base unit 227 is equipped with a telephone line part 216, a security signal input/output part 217, an antenna 218, a wireless part 219, a control part'220, a display part 221, an input part 222, a sound output part 223, a sound input part 224, and.a memory part 225. Also, the base unit 227 has an emergency reporting priority table 226 which comprises a plurality of handset identification information and.priority information corresponding to them, and this emergency reporting priority table is held in the memory part 225.

The sensor 213 includes a door sensors for detecting opening and closing of a door, a motion sensors for detecting a moving object, or a smoke detectors etc. This sensor 213 is disposed at a strategic spot in a house, and connected to the security control part 210 which was disposed at a relatively safe place in a house, by wire or wireless communication path.

On one hand, the base unit 227 is disposed in a living room etc. in which a habitant is normally living, since it functions as a telephone which was connected to the public line network 211 byway of the telephone line 214, the security control part 210 and the telephone line 212 in a normal state. Furthermore, the plurality of handsets 2 00 which can be connected to this 1 unit of the base unit 227 are disposed in a dispersed manner in for example, a bed room, a children's room etc., respectively.

Normally, since electric power is supplied to the handsets 200 by use of secondary batteries, a charger (charging cradle) is required for charging the secondary battery, and 1 unit of a charging cradle per 1 unit of the handset 200 is disposed at the same place as the handset 200.

These things are connected with wire or wireless to configure a security system in a home.

An operation of the cordless phone apparatus with multi-handset, which is used in the security system configured as above will be described as follows.

The cordless phone apparatus 228 has such 2 functions that (1) the handset 200 and the base unit 227 function as emergency reporting devices of the security system, respectively, or (2) they functions as visual or sound display devices of security information.

(1) A function as the emergency reporting device: the base unit 227 and each handset 200 are equipped with emergency switches through which it is possible to input manually, and at the time of occurrence of an emergency situation such as detection of fire, an intruder, a user operates the emergency switch of the accessible base unit or handset, and thereby, occurrence of an emergency situation is informed to the security control part 210. In case that occurrence of an emergency situation is informed from the base unit 229, information is communicated directly by the wired communication path 215. Also, in case that occurrence of an emergency situation is informed from the handset 200, information is once communicated to the base unit 227 by wireless, and thereafter, it is communicated to the security control part 210 by way of the base unit 227.

In accordance with it, the security control part 210 automatically gives communication of occurrence of an emergency situation to a publ ic securi ty division such as a central security center, a police station, and a fire station, through the public line network 211.

In the same manner as an emergency signal from the sensor 213,

(2) A function as the display device: On the occasion that it functions as the display device, there is such a case that sequential information distribution has to be carried out from the base unit to every single handset 200 (or group of handsets), such as a case that a short standard message is simultaneously communicated from the base unit 227 to the plurality of handsets 200 on a wireless communication path, and a case that a prerecorded emergency message is released in the handsets 200, or relatively long non finite form display is carried out. In case that a warning sound is sounded in the handset 200 as a first report in case of, for example, occurrence of fire, and in case that a short standard message such as "occurrence of an emergency situation" is made to be displayed on the handset, a command for instructing an operation thereof is communicated simultaneously on a wireless communication path. The handset 200, which received the information, displays it visually or acoustically.

For in case that one of the sensors 213 detected an emergency situation (e.g., smoke due to initial fire)., firstly, that abnormality is informed to the security control part 210. The security control part 210, which recognized the abnormality, automatically informs the abnormality to a public emergency center such as a central division of a security company which was contracted in advance or a fire station, by the telephone line 212 through the public line network 211. If the cordless phone apparatus 228 is using the telephone line 212 at this time, the security control part 210 cuts off the cordless phone apparatus 228 and the telephone line 212 on a mandatory basis, and carries out line switching.

At the same time as this, the security control part 210 sends an alarm signal to the base unit 227 byway of the security signal line 215 in order to inform habitants in a house of occurrence of an abnormality.

When the alarm signal is put out from the security control part 210, the base unit 227 receives this alarm signal through the security signal input/output part 217, and displays amessage (or releases a message) which informs the abnormality, on the display part 221 (or sound output part 223) of the base unit 227 itself under the control of the control part 220.

Also, alarm information has to be communicated to the handsets 200 which were disposed in a dispersed manner. Firstly, in order to sound a warning sound in the handset 200 as a first report, or to display a standard message of "occurrence of en emergency situation", the base unit 227 sends a command which instructs the operation to all of the handsets 200 on a wireless communication path simultaneously. The handset 200, which received the information, displays it visually or acoustically.

In addition to this, in case that information, which shows a concrete content of an alarm (hereinafter, referred to as alarm message) is sent to each handset 200, relatively long nonfinite form display is to be carried out in the handset 200. At this time, sequential information distribution is carried out to every single handset (or group of handsets), and an advantage of this patent will be generated at this time.

This alarm message is converted into a wireless signal by the control part 220, and controls the wireless part 219 and is transmitted to the handset 200 through the antenna 218. In this regard, however, in this case, it becomes a sequential transmission, and the alarm message is sent with specifying the handset 200 as a destination of a sequential transmission. In a wireless signal which includes the alarmmessage, contained is the identification information 205 which identifies the handset 200. In the sequential transmission, over setting up such a value that each handset 200 has this identification information 205, the alarmmessage is sequentially transmitted.

However, in a conventional cordless phone apparatus with multi-handsets, a selection sequence (priority sequence) of handsets is determined when a telephone is installed, and therefore, a transmission sequence (priority sequence) of the alarm message has been fixed regardless of a actual status of use of the handset 200. In case that a selection sequence of the handset 200, which disposed in a room that is most frequently utilized, is late, a sequence for transmitting the alarmmessage to there is postponed, and as a result, there may occur such a case that to inform a habitant of an alarm content is delayed.

In this embodiment, by holding the emergency reporting priority table 226 in the memory part 225 of the base unit 227, it becomes possible to set up a sequence of an emergency report with respect to each handset 200. When a habitant inputs handset identification information and priority corresponding to it, from the input part 222 of the base unit 227, the control part 220 updates identification information and priority corresponding to it, in the memory part 225.

For example, normally, a handset which is disposed in a living room which is most frequently utilized by a habitant or in the vicinity thereof is set up with high priority, and it is possible to properly set up in accordance with living of a habitant, such as a handset in the vicinity of a bath room at the bust time, and a cordless phone handset in a study room at the time of working. In addition, this setup is available not only from the input part 222 of the base unit 227, but also from the input part 207 of the handset 200 which is connected by a wireless communication path.

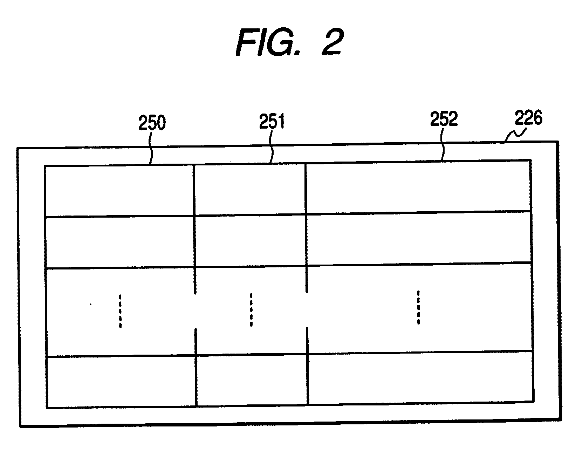

In case that there occurred a necessity to send an alarm message, the control part 220 searches a handset with high priority, with reference to the emergency reporting priority table 226 in the memory part 225, and sends the alarm message in sequence. A configuration example of the emergency reporting priority table 226 is shown in Fig.2.

Here, the emergency reporting priority table 226 has the number of entries (here, N units) which is equivalent to the number of handsets 200, and each entry is composed of an identification information field 250 which holds identification information of the handset 200, a priority field 250 which shows a priority level of that handset 200, and a reporting completion flag field252 which shows that an emergency report was completed.

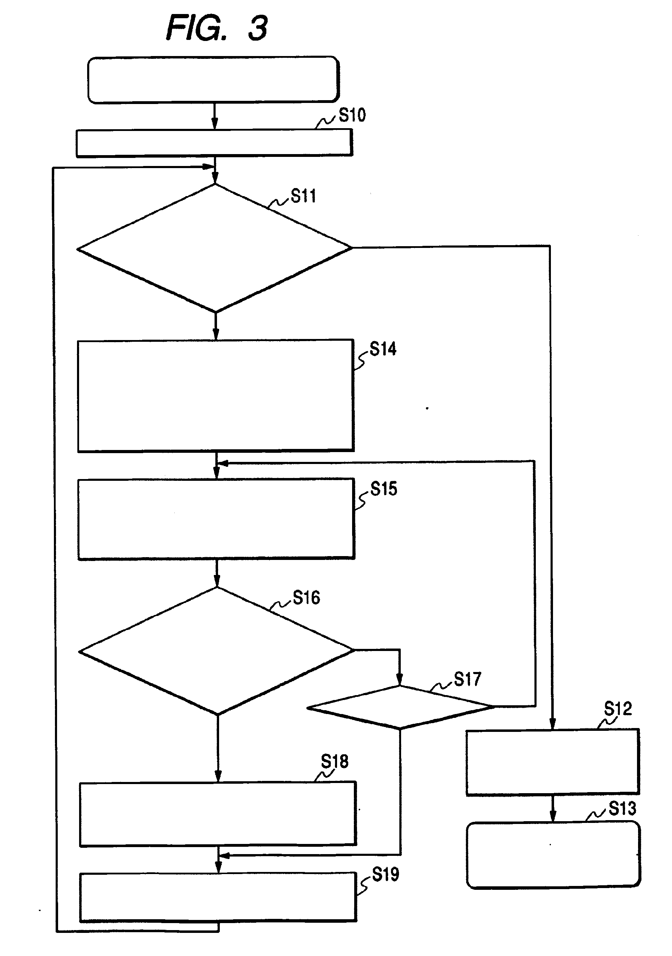

Then, details of procedures of an emergency reporting process in the base unit of the cordless phone apparatus which is used in the security system which relates to the embodiment 1 of this invention will be described by use of Fig.3. when an emergency situation occurs and an emergency report is started (S10) , the control part 220 refers to the emergency reporting priority table 226, and the control part 220 checks whether reporting completion flags.of the reporting completion flag field 252 thereof are set as to all handsets (S11).

If reporting completion flags of the reporting completion flag fields 252 of all the handsets 200 are set, it means that emergency reports have been completed as to all the handsets 200, and therefore, the control part 220 resets the reporting completion flags and finishes the emergency reporting process (S13) .

At the time of process start, there is 1 unit or more of the handsets 200 for which the emergency reports have not yet been completed. Therefore, targeting at an entry in which a communication completion flag in the reporting completion flag field 252 is not set, the control part 220 selects an entry which indicates the highest priority out of each priority field 251 (S14).

Here, for example, in the priority field 251 of each entry, numerical values from 1 to N are allocated in the order from a thing with higher priority. A value of the identification information field 2 50 of the entry selected in this manner becomes identification information of the identification information field 250 of the handset 200 which was selected so as to carry out the emergency report.

Then, the control part 220 tries to establish a wireless communication path with the selected handset 200 by controlling the wireless part 219 (S15). There is such a case that the establishment of this wireless communication path requires long time, or is impossible (S16) . On this account, maximum waiting time (e.g., 30 seconds) is set up for wireless communication path establishment to the selected handset 200. 'Unless accumulated time exceeds this time, the wireless communication path establishment is continued to be tried (S17). The control part 220 treats as time-out in case that this time was exceeded, and changes to S19.

As to handling of the time-out handset 200, there is such a method that communication establishment is tried again after all of trials of emergency reporting to all the handsets 200 was finished, but here, in order to simplify the explanation, it is assumed that the emergency report was completed as to the time-out handset 200, and it is designed that the emergency report is not carried out.

Therefore, as to a thing for which a wireless communication path was established during a period of the maximum waiting time, an emergency report message is communicated to the handset 200 through the antenna 218 (S18).

As to the selected handsets 200, as to a thing for which the emergency report was completed, or which became time-out, the reporting completion flag field 252 of the pertinent entry is set up by the control part 220 (S19).

In this manner, the control part 220 completes the emergency reporting process as to the selected handset 200, and selects the next handset 200 for which communication has not yet completed, and hereinafter, changes to S12 and the same processing is repeated.

On one hand, in the handset 200, the control part 203 compares identification in a wireless signal which was received through the antenna 201 and the wireless part 202, and identification information 205 which is held in the memory part 204, and in case that they coincided, decodes an alarm message which is included in the wireless signal, and displays an appropriate message (or releases a message) for reporting an abnormality on the display part 206 (or sound output part 208) .

As above, according to this embodiment, since a reporting order of a plurality of handsets at the time of emergency can be changed, emergency information is communicated in preference to a handset which requires higher emergency, in accordance with a status of use of the handset, and generated is such an advantage that it is possible to shorten delay of emergency information distribution.

### (Embodiment 2)

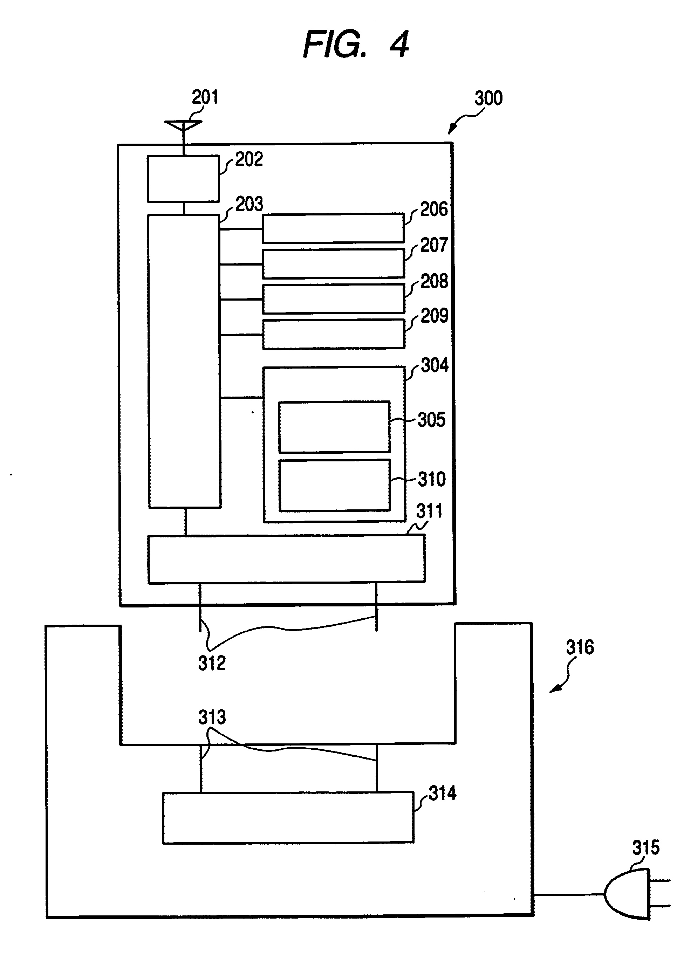

Fig. 4 is a block diagram of a handset of a cordless phone apparatus which is used in a security system which relates to an embodiment 2 of this invention. Aconfiguration of a handset 200 in this embodiment is basically the same as the handset 200 which was shown in Fig.2, and since an antenna 201, a wireless part 202, a display part 206, an input part 207, a sound output part 208,. and a sound output part 209 have the same functions, the same reference numerals are given to them and the explanations will be omitted. Also, the telephone line part 216 and the security signal input/output part 217 were omitted in Fig. 4, for the sake of convenience.

The handset 300 in this embodiment is equipped with a charge number input terminal 312, a charge number obtaining. part 311, identification information 305 and charge number information 310 in a memory part 304, and a control part 303 for controlling an entirety of the handset 300 as shown in Fig. 4 . Also, a charging cradle 316 is composed of a charge number output terminal 313 and a charge number holding part 314 and a power source input part 315.

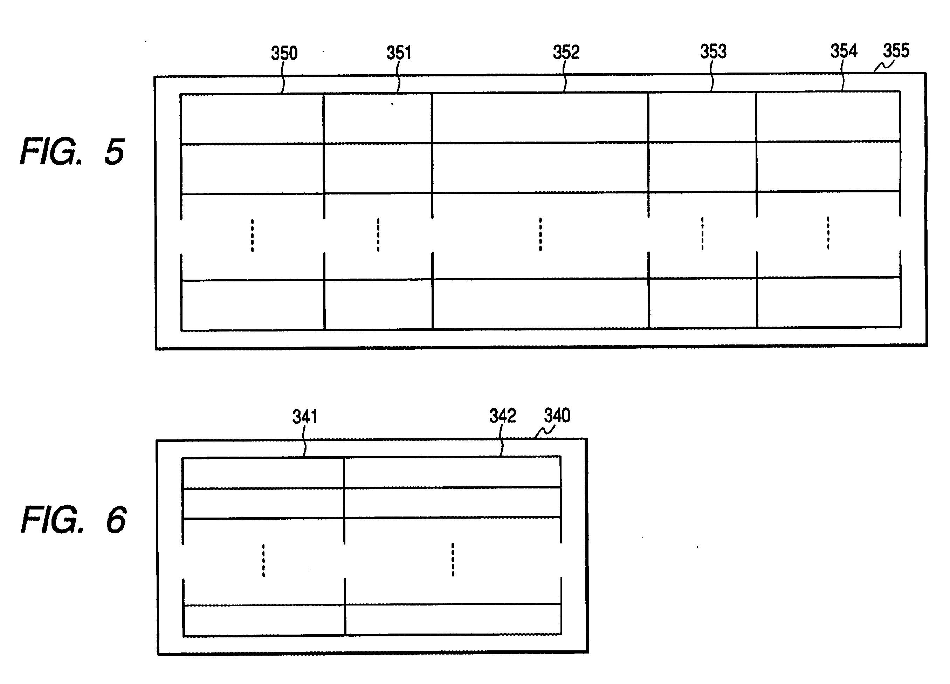

Other constituent elements than these of the base unit etc. are the same as those in Fig.1, but a configuration of an emergency reporting priority table which is held in the memory part 225 of the base unit takes a configuration which is shown in Fig.5, in this embodiment. An emergency reporting priority table 355 shown in Fig.5 has the number of entries (here, N units) , which is equivalent to the number of the handsets 300, and each entry is composed of an identification information field 350 which holds identification information of the handset 300, a priority field 351 which shows a priority order of that handset 300, a reporting completion flag field 352 which shows that an emergency report was completed, a setup flag field 353 which shows that there.was the most recent update of the priority field 351, and a position priority field 354 which shows priority due to a charging cradle position. Furthermore, in this embodiment, a position priority conversion table 340 is held in the memory part 225 of the base unit 227'as shown in Fig.6.

As shown in Fig. 6, the position priority conversion table 340 has the number of entries (here, N pieces), which is equivalent to the number of the handsets 300 (i.e., the number of the charging cradles 316), and is composed of a charge number field 341 and a position priority filed 342.

As to the cordless phone apparatus with multi-handsets, which is used in the security system which relates to the embodiment 2 of this invention, its operationwill be hereinafter described.

In this embodiment, since the charging cradle, which is used in combination with the handset, is fixed to an allocation site (connected to an outlet of a commercial power source), focusing attention on such a fact that the allocation site is normally moved, when a certain handset was charged by use of a charging cradle, an allocation site of the charging cradle is assumed to be a current position of the handset. The base unit can take hold of the allocation site of the handset by this, and determines a priority order of emergency reporting by utilizing this position information.

In cordless phone apparatuses which have a lot of handsets, there is a thing which was designed for a habitant to be able to set up a priority sequence as to all or a part of handsets, but in a handset for which the priority sequence is not set up, the priority sequence of them remains to be a default sequence at the time point when the security system was introduced; or a priority sequence which was set up by a habitant in the past, and does. not accord with a living situation at the present time point, and there is such a possibility that the priority sequence of those handsets has become inappropriate. Also, since it is a thing which is used by a habitant over moving around freely in a home, there may be also such a case that allocation sites of 2 units of handsets are switched each other.

In contrast to this, as in this embodiment, when a handset was charged by a charging cradle, by determining the priority order of emergency reporting through the use of position information of the charging cradle, the base unit can recognize a position of the handset, regardless of a change of the allocation site due to a movement of the handset, and therefore, it is possible to communicate a report which requires emergency to an appropriate handset, and to shorten delay of an emergency report.

Hereinafter, concrete operational contents will be described in the order of (1)import of position information of a charging cradle into a handset, (2) communication of position information from a handset to a base unit, (3) taking hold of position information of a handset in a base unit,. and (4) determination of a priority sequence.

(1) The position information of the charging cradle is, as shown in Fig.4, held in the charge number holding part 314 inside the charging cradle 316.

For example, in case that there are N units of handsets, there are N units of the charging cradles 316, and position information of them is expressed as charge numbers of 1~N. At such a time point that the handset 300 was placed on the charging cradle 316, the charge number output terminal 313 of the charging cradle 316 side is in contact with the charge number input terminal 312 of the handset 300 side, and the charge number of the charging cradle 316 is saved as the charge number information 310 in the memory part 304 by the charge number obtaining part 311 of the handset 300, under the control of the control part 303 through the charge number obtaining part 311.

This charge number information 310 is updated as corresponding charge number information every time when the handset 300 is placed on the charging cradle 316 (in order to clarify such a fact that the charging cradle is fixed in Fig. 4, the power source input part 315, which is a commercial power source outlet, is described, but other constituent elements including a charging circuit portion are omitted.).

(2) The charge number information 310, which was saved in the memory part 304 by the charge number obtaining part 311 of the handset 300 is communicated to the base unit 227 through the wireless part 202 and the antenna 201 of the handset 300, in a periodic (every several seconds) confirmation procedure of a wireless communication path at the time of non-calling, which is generally carried out in cordless phone apparatuses.

(3) The charge number information 310 of each handset 300, which was communicated to the base unit, is converted into the position priority field 342 by use of the position priority conversion table 340 of the memory part 225, and saved in the position priority field 354 of a corresponding entry of the emergency reporting priority table 355.

The position priority conversion table 340 is a table which associates the charge number field 341 and its position priority field 342, and the position priority field 342 represents a priority sequence which is based upon an allocation position of the charging cradle 316.

For example, N units of the charging cradles 316 are represented by numerical values of 1~N, and in case that, in a cordless phone apparatus which has 3 units of handsets 300 (i.e., 3 units of charging cradles) , a charging cradle 316 with charging number 2 is placed in a room which is most frequently utilized by habitants, and a charging cradle with charge number 1 is placed in a room which is next frequently utilized by habitants, and a charging cradle with charge number 3 is placed in a room which is not almost utilized, the charge number 1, 2, 3 become position priority of 2, 1, 3, respectively. The positionpriorityconversiontable 340 is setupwhenthe charging cradles 316 were placed, and is not changed unless allocations of the charging cradles 316 are changed.

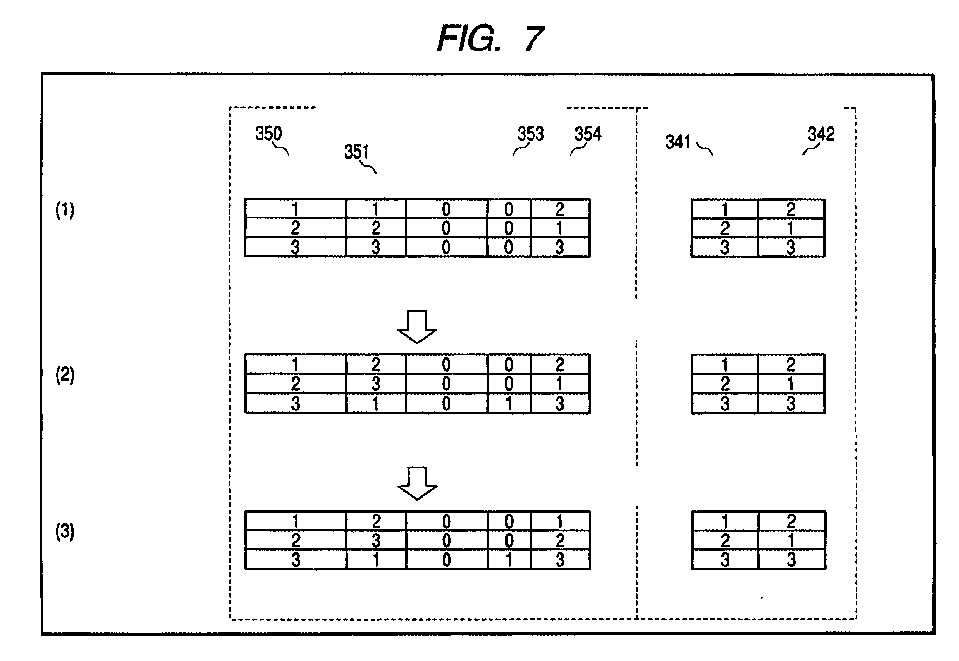

(4) A determining procedure of the priority order in case that there are 3 units of the handsets 300 will be described by use of Fig. 7.

<1> A default state in which the charging cradle 316 has been disposed: With regard to 3 units of the handsets 300, the priority is a default (order of handset identification number) . Since a correspondence of identification information of the identification information field 350 of each handset 300 at this time, and charge number of the charge number field 341 at the time of respective final charging is a default state of a handset 1 and a charge number 1, a handset 2 and a charge number 2, and a handset 3 and a charge number 3, the emergency reporting priority table becomes the position priority field 354 which shows priority due to charging cradle positions, as shown in Fig.7.

A communication sequence in case that an emergency report was generated under this state becomes a sequence of handset 2 → handset 1 → handset 3 in accordance with the position priority of the position priority field 342.

<2> A state after priority sequence setup: From the state of <1>, the setup flag field 353 of an entry of the handset 3, which shows such a state that there was a setup change by a habitant so as to report as to the handset 3 at the beginning, becomes 1 and shows that the setup change of the priority was carried out. The priority of the handset 3 becomes 1 which shows toppriority, andas a result, priority of remaining handset becomes.forward rotation, and the handset 2 becomes priority 2 and the handset 1 becomes priority 3. A correspondence of a handset and a charge number at the time of final charging is not changed. A communication sequence in case that an emergency report was generated under this state becomes a sequence of handset 3 → handset 2 → handset 1 in accordance with the priority field 351 which shows a priority order.

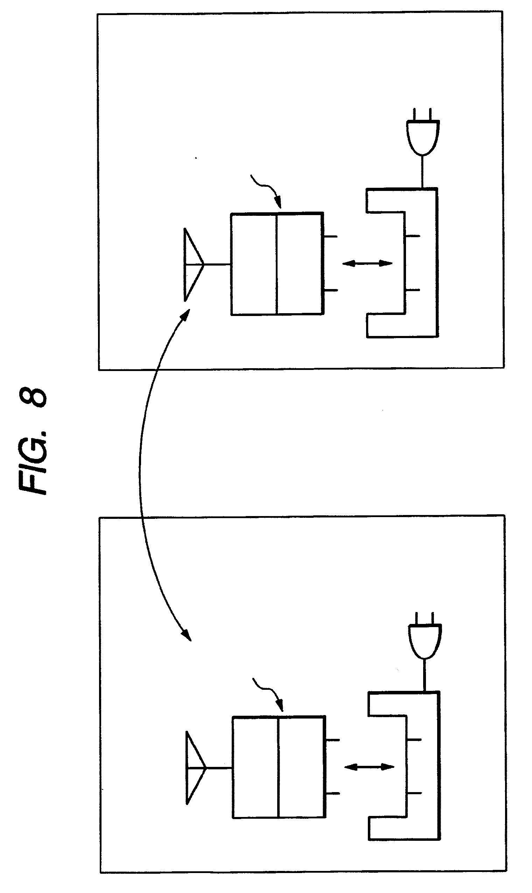

<3> A state after a position change of a handset: In such astatethatallocationpositions (securityareas) of the handset 1 and the handset 2 were switched from the state of <2> as shown in Fig. 8, a charging number of a charging cradle 2 is saved in the handset 1 by charging after movement, and a charge number of a charging cradle 1 is saved in the handset 2. As a result of this, as shown in Fig.7, the position priority field 354 of the emergency reporting priority table is changed. A communication sequence in case that an emergency report was generated under this state becomes a sequence of handset 3 → handset 1 → handset 2, and except for the handset 3 which was set up by a habitant on a preferential basis, the handset 1, which is located on the charging cradle which is more frequently utilized by habitants, gets preference over the handset 2.

### (Embodiment 3)

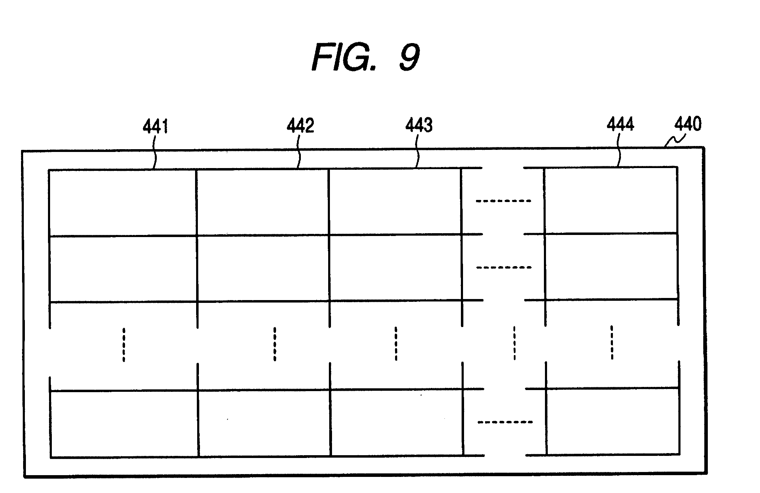

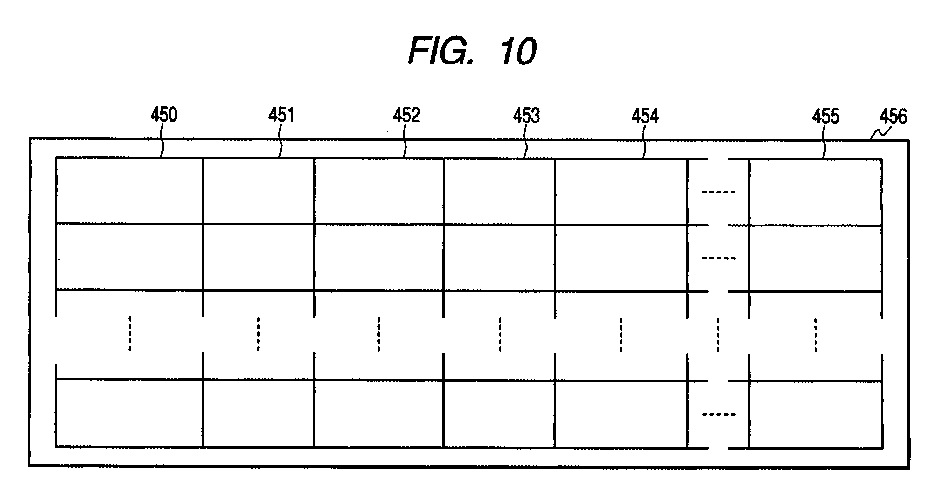

In.an embodiment 3, as shown in Fig.9, by configuring the position priority conversion table 440 having position priority information which differs with respect to each type of an alarm, and the emergency reporting priority table 456 as shown in Fig.10, in the memory part 225 of the base unit 227, position priority information which differs with respect to each type of an alarm is held. And, in accordance with a type of an emergency report, an alarm is reported to a handset which is located at such a position that an alarm should be reported on ahead.

At this time, the position priority conversion table 440 has the number of entries (here, N units), which is equivalent to the number of the handsets 300 (i. e., the number of the charging cradles 316), and is configured by a charge number field 441 and position priority fields 442~444 with the number (here, M types) which is equivalent to the number of types of alarms.

The emergency reporting priority table 456 has the number of entries (here, N units), which is equivalent to the number of handsets in the same manner as in the embodiment 2, and each entry is composed of an identification information field 450 which holds identification information of handsets, a priority field 451 which shows a priority sequence of that handsets, a report completion field 452 which shows that an emergency report was completed, and a setup flag field 453 which shows that there was the most recent update of the priority field 451, and is further composed of position priority fields 454, 455 which show priority due to charging cradle positions with respect to each type of an alarm (here, M types).: Other configuration is the same as in the embodiment 2.

An operation of the cordless phone apparatus which is used in the security system configured as above will be hereinafter described.

For example, it is assumed that 3 rooms in a house are equipped with smoke sensors 1~3 for detecting occurrence of fire, respectively. At this time, by associating alarms of the smoke sensors 1~3 with position priority for alarm types 1~3, respectively, it is possible to properly send an emergency report to each handset, in accordance with a place in which fire was occurred.

It is assumed that the position priority table 440 is set up so as to report fire by priority from an adjacent handset as shown in the figure (in this regard, however, in case of fire from a center room, a room 1 gets preference over a room 3) . Also, the emergency reporting priority table 456 is such a default state that there is no setup of priority by habitants, but becomes a. state in which, reflected was such a result that the handset 2 and the handset 3 moved each other.

Under the suchlike state, a sequence of reporting alarms from respective smoke sensors becomes,
1) Alarm type 1 (reporting sequence at the time of alarming by the smoke sensor 1):
   handset 1 → handset 3 → handset 2
2) Alarm type 2 (reporting sequence at the time of alarming by the smoke sensor 2):
   handset 3 → handset 1 → handset 2
3) Alarm type 3 (reporting sequence at the time of alarming by the smoke sensor 3):
   handset 2 → handset 1 → handset 3, and it is possible to report an alarm in an appropriate order to a handset in each room, in accordance with such a plate that fire was occurred regardless of a movement of handsets.

As above, according to this embodiment, generated is such anadvantage that, by changing a reporting sequence in accordance with a type of an alarm, it is possible to shorten delay of an emergency report to an allocation site which requires emergency.

### (Embodiment 4)

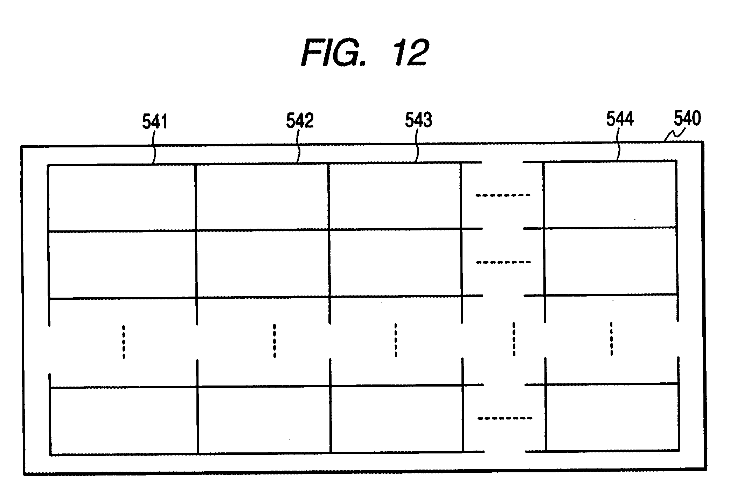

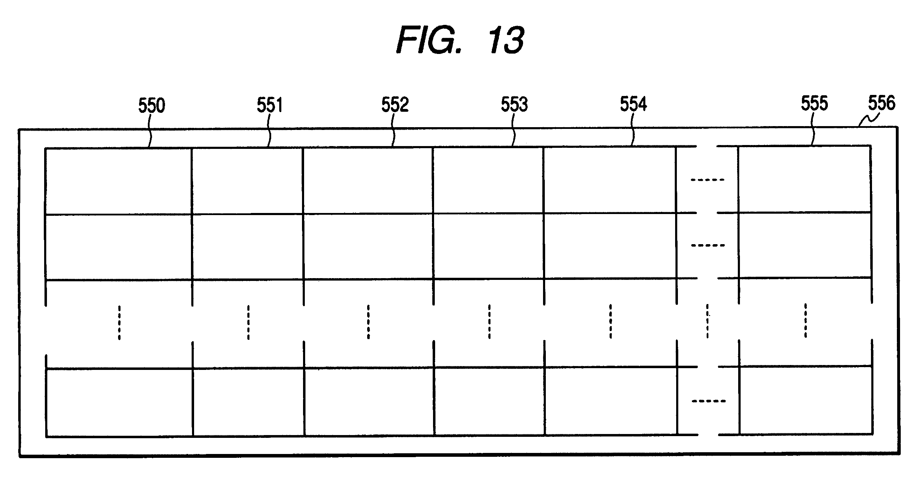

In an embodiment 4, by configuring a position priority conversion table 540 having position priority information which differs with respect to each time zone in which an alarm is generated as shown in Fig. 12, and an emergency reporting priority table 556 as shown in Fig. 13, the position priority information, which differs with respect to each time zone in which an alarm is generated, is held. And, it is designed not to fix a reporting sequence by an allocation site of a handset, but to change the reporting sequence in accordance with a time zone in which an alarm is. generated.

At this time, the position priority conversion table 540 has the number of entries (here, N units), which is equivalent to the number of handsets (i. e., the number of charging cradle) , and is composed of a charge number filed 541, and position priority fields 542~544, the number (here, M types) of which is equivalent to the number of time zones of an alarm. The emergency reporting priority table 556 has the number of entries (here, N units), which is equivalent to the number of handsets in the same manner as in the embodiment 2, and each entry is composed of an identification information field 550 which holds identification information of handsets, a priority field 551 which shows a priority sequence of that handsets, a report completion field 552 which shows that an emergency report was completed, and a setup flag field 553 which shows that there was the most recent update of the priority field 551, and is further composed of position priority fields 554~555 which show priority due to charging cradle positions with respect to each time zone in which an alarm is generated (here, M types) . Other configuration is the same as in the embodiment 2.

An operation of the cordless phone apparatus which is used in the security system configured as above will be hereinafter described.

For example, it is assumed to be such a case that the time zones in which alarm are generated are divided into 2 of time AM6:00~PM22:00 when habitants are keeping awake (time zone 1) and other time when habitants are sleeping (time zone 2), in accordance with living hours of habitants. In this case, in the position priority conversion table 540, a time 1 position priority field is designed to set up a sequence for giving priority to a room such as a living room, which has such a high possibility that habitants utilize it during a period of time when habitants are keeping awake (time zone 1) , and a time 2 position priority filed is designed to set up a sequence for giving priority to a room such as a bed room, which is used in the time zone 2.

At this time, in the emergency reporting priority table 556, a content of the position priority conversion table 540 is reflected in the same manner as in the embodiment 3. In case that an alarm was generated under this state, position priority of that time zone is selected in accordance with time when an alarm was generated, and it is possible to carry out a report on a preferential basis to a room which requires emergency in such a manner that, in case of daytime, priority is given to a living room, and in case of nighttime, priority is given to a bed room. Or also, it is possible to set up in accordance with 1 week living habits of a habitant, by setting up priority through the use of a day of the week when an alarm was generated.

As above, according to this embodiment, generated is such an advantage that it is possible to.shorten delay of an emergency report to an allocation site which requires emergency, by changing a reporting sequence in accordance with time when an alarm was generated.

### (Embodiment 5)

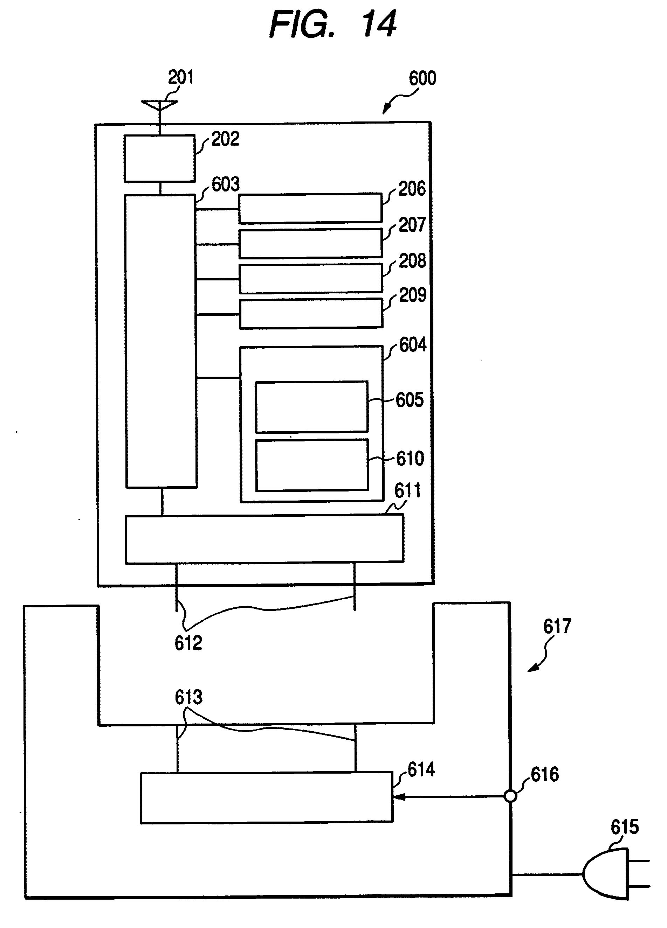

In an embodiment 5, by utilizing information which shows a position of a habitant due to a moving object sensor etc. disposed in each room, reporting to a handset in a room with a high possibility that a habitant is present is carried out by priority. Fig.14 is a block diagram of a cordless phone apparatus withmulti-handsets, which is used in a security system which relates to the embodiment 5 of this invention.

In Fig.14, a configuration of a handset 600 in this embodiment is basically the same as that of the handset 200 in Fig. 1, and since an antenna 201, an wireless part 202, a display part 206, an input part 207, a sound output part 208, and a sound input part 209 have the same functions, the same reference numerals are given to them and the explanations will be omitted. Also, the telephone line part 216 and the security signal input/output part 217 were omitted in Fig.14, for the sake of convenience.

The handset 600 in this embodiment is equipped with a sensor information input terminal 612, a sensor information obtaining part 611, a control part .603, and a memory part 604 which holds identification information 605 and sensor information 610.

Also, a charging cradle 617 is composed of a sensor information output terminal 613, a sensor information holding part 614 whichholds sensor information from a sensor information input part 616, and a power source input part 615. To the sensor information input terminal 612, a sensor (not shown) such as a moving object sensor is connected.

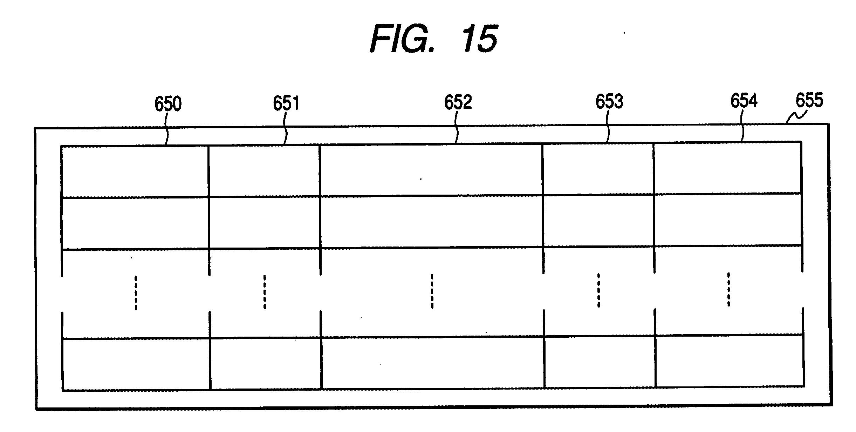

Other constituent elements than these of the base unit etc. are the same as those in Fig.1, but a configuration of the emergency reporting priority table 226 which is held in the memory part 225 of the base unit takes a configuration which is shown in Fig.15, in this embodiment 5.

The emergency reporting priority table 655 has the number of entries (here, N units), which is equivalent to the number of handsets 600, and each entry is composed of an identification information field 650 which holds identification information of the handset 600, a priority field 651 which shows a priority level of that handset 600, a report completion field 652 which shows that an emergency report was completed, a setup flag field 653 which shows that there was the most recent update of the priority field 651, and a sensor information field 654 which shows sensor information and time information.

As to the cordless phone apparatus with multi-handsets which is used in the security system, configured as above, a content of its concrete operations will be described in the order of (1) import of sensor information into a charging cradle, (2) communication of information from a charging cradle to a handset, (3) taking hold of sensor information in a base unit, and (4) determination of a priority sequence.
(1) In case that it was detected that a habitant is present in a room etc. in which a moving obj ect sensor etc. is installed, that detection information is sent to the charging cradle 617 as sensor information. The charging cradle 617 imports the sensor information from the sensor information input part 616, and saves it in the sensor information holding part 614. In the sensor information, included are a flag which shows that a movement etc. of a habitant was detected, and information which shows time when it was detected. This sensor information is updated to up-to-date information every time when detection is carried out by a sensor.
(2) The sensor information which was held in the sensor information holding part 614 is imported into the handset by the sensor information obtaining part 611, through the sensor information output terminal 613 and the sensor information input terminal 612, every time when the handset 600 is placed on the charging cradle 617.
   In the handset, the sensor information is saved as the sensor information 610 in the memory part 604 under the control of the control part 603.
(3) The sensor information 610, together with the identification information 605, is communicated to the base unit through the wireless part 202 and the antenna 201 of the handset 600, in a confirmation procedure of a periodic (every several seconds) wireless communication path at the time of non-calling, which is generally carried out in cordless phone apparatuses. In the base unit, this sensor information is stored in the sensor information field 654 which corresponded to identification information of the emergency reporting priority table 655.
(4) In case of carrying out an emergency report, since priority is given to a setup by a habitant in the same manner as in the embodiment 2, the base unit carries out a report firstly to the handset 600 in which the setup flag field 653 of the emergency reporting priority table 655 is set.

Then, to the handset 600 in which the setup flag field 653 is not set, reporting is carried out on a preferential basis from such a thing that time information, which is included in its sensor information .field 654, is the newest.

As above, according to this embodiment, it is possible to take hold of the newest position of a habitant, and generated is such an advantage that it is possible to shorten delay of an emergency report to an allocation site. which requires emergency.

### (Embodiment 6)

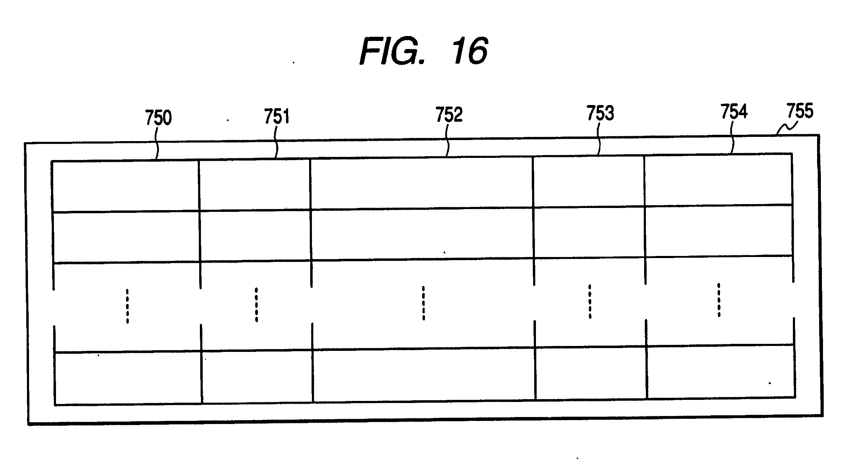

In a cordless phone apparatus which is used in a security system which relates to an embodiment 6 of this invention, a base unit takes hold of a status of a wireless communication path to a handset in advance, and determines a priority sequence on the basis of link status information of the wireless communication path, and thereby; carries out reporting to a handset which requires shorter time for establishing a wireless communication path by priority. A configuration of this embodiment 6 is basically the same as the configuration shown in Fig.1, but the configuration of the emergency reporting priority table 226, which is held in the memory part 225 of the base unit, is different, and becomes a configuration which is shown in Fig.16. Here, the emergency reporting priority table 755 has the number of entries (here, N units) which is equivalent to the number of handsets, and each entry is composed of an identification information field 750 which holds identification information of the handset, a priority field 751 which shows a priority level of that handset, a reporting completion flag field 752 which shows that an emergency report was completed, a setup flag field 753 which shows that there was the most recent update of the priority field 751, and a link information field 754 which shows a status of a wireless communication path. with the handset.

As to the cordless phone apparatus with multi-handsets which is used in the security system which relates to the embodiment 6 of this invention, configured as above, a content of its concrete operations will be described in the order of (1) import of link information into abaseunit, (2) determination of a priority sequence.
(1) In a confirmation procedure of a periodic (every several seconds) wireless communication path at the time of non-calling, which is generally carried out in cordless phone apparatuses, a base unit takes hold of a degree of a status of a wireless communication path with a handset, as link information. This link information is represented by, for example, the number of times for retrying at the time of wireless communication, or represented as an error ratio of wireless packets. This link information is stored in the link information field 754 of an entry which corresponded to identification information of a handset in the emergency reporting priority table 755.
(2) In case of carrying out an emergency report, since priority is given to a setup by a habitant in the same manner as in the embodiment 2, the base unit carries out a report firstly to a handset for which the setup flag field 753 of the emergency reporting priority table 755 is set. Then, to a handset for which the setup flag field 753 is not set, reporting is carried out on a preferential basis from a handset which has a good link status of its link information field 754.

In this manner, by leaving a handset which requires more time for establishing a wireless communication path until later, reduced is waiting time of a handset which has a good link status, and there is such an advantage that it becomes possible to report more handsets in a given amount of time.

### (Embodiment 7).

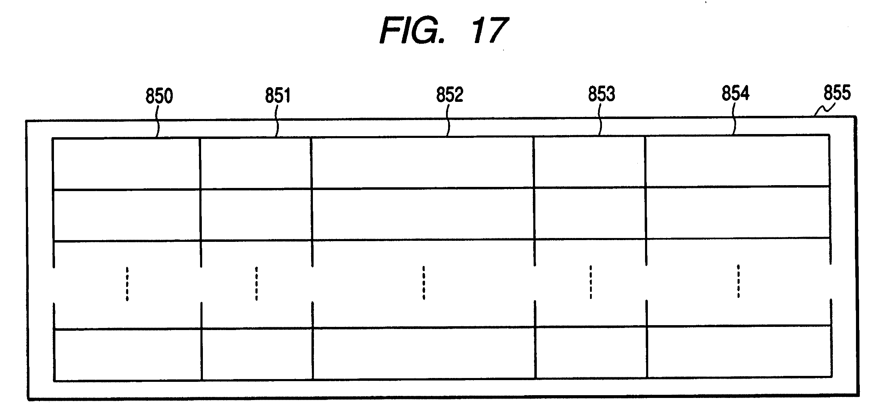

In a cordless phone apparatus which is used in a security system which relates to an embodiment 7 of this invention, a base unit takes hold of a charging status of a handset in advance, and reporting is carried out by priority to a handset with a smaller amount of charges. A configuration of this embodiment 7 is basically the same as the configuration shown in Fig.1, in the embodiment 1, but the configuration of the emergency reporting priority table 226, which is held in the memory part 225 of the base unit, is different. The configuration of the emergency reporting priority table 226 in this embodiment is shown in Fig.17.

Here, an emergency reporting priority table 855 has the number of entries (here, N units) which is equivalent to the number of handsets, and each entry is composed of an identification information field 850 which holds identification information of the handset, a priority field 851 which shows a priority level of that handset, a reporting completion flag field 852 which shows that an emergency report was completed, a setup flag field 853 which shows that there was the most recent update of the priority field 851, and a charge information field 854 which shows a charging status of a handset.

As to the cordless phone apparatus with multi-handsets which is used in the security system which relates to the embodiment 7 of this invention, configured as above, a content of its concrete operations will be described in the order of (1) import of link information into a base unit, (2) determination of a priority sequence.
(1) In a confirmation procedure of a periodic (every several seconds) wireless communication path at the time of non-calling, which is generally carried out in cordless phone apparatuses, a base unit takes hold of a charging status of a certain handset as charging information
   This charging information is represented by numerical values as for example, a remaining amount of a handset battery which is understood by the handset. This charging information is stor4ed in the charging information field 854 of an entry which corresponded to identification information of the handset in the emergency reporting priority table 855.
(2) In case of carrying out an emergency report, since priority is given to a setup by a habitant in the same manner as in the embodiment 2, the base unit carries out a report firstly to a handset for which'the setup flag field 853 of the emergency reporting priority table 855 is set.

Then, to a handset for which the setup flag field 853 is not set, reporting is carried out on a preferential basis from a handset which has a smaller battery remaining amount numerical value of that charging information field 854.

In this manner, by leaving a handset which has more battery remaining amount until later, there is such an advantage that it makes it difficult to occur such a situation that a handset with a fewer remaining amount of a battery is shut off when it is waiting for a report.

### (Embodiment 8)

In a cordless phone apparatus which is used in a security system which relates to an embodiment 8 of this invention, a base unit records such time that a call was carried out in each handset, and at the time when an alarm was generated, reporting is carried out in preference to a handset in which there was a call record in a certain period of time. A configuration of this embodiment 8 is basically the same as the configuration shown in Fig.1, in the embodiment 1, but the configuration of the emergency reporting priority table 226, which is held in the memory part 225 of the base unit, is different. The configuration of the emergency reporting priority table 226 in this embodiment is shown in Fig.17.

Here, an emergency reporting priority table 955 has the number of entries (here, N units) which is equivalent to the. number of handsets, and each entry is composed of an identification information field 950 which holds identification information of the handset, a priority field 951 which shows a priority level of that handset, a reporting completion flag field 952 which shows that an emergency report was completed, a setup flag field 953 which shows that there was the most recent update of the priority field 951, and a operating time information field 954 which shows final operating time of a certain handset.

As to the cordless phone apparatus with multi-handsets which is used in the security system which relates to this embodiment of this invention, configured as above, a content of its concrete operations will be described in the order of (1) importoflinkinformationintoabaseunit, (2) determination of a priority sequence.
(1) A base unit takes hold of such time that the base unit took hold of an operation of a handset, such as a calling operation and a key operation by a certain handset, as operating time information.
   This operating time information is stored in the operating time information field 954 of an entry which corresponded to identification information of a handset in the emergency reporting priority table 955.
(2) In case of carrying out an emergency report, since priority is given to a setup by a habitant in the same manner as in the embodiment 2, the base unit carries out a report firstly to a handset for which the setup flag field 953 of the emergency reporting priority table 855 is set.

Then, to a handset for which the setup flag field 953 is not set, reporting is carried out on a preferential basis from a handset which has the most recent operating time information field 954.

In this manner, by giving priority to reporting to a handset which was used most recently, there is such an advantage that it is possible to shorten waiting time of an emergency report to a handset which has a high possibility that a habitant is present.

### (Embodiment 9)

This embodiment 9 is such a thing that a time-out period of each handset is changeable in accordance with a priority order. If a period of time-out of a handset at the time of establishing a wireless communication path is the same in case of any handset, realized is such a situation that reporting is not carried out when a given time-out period has passed even in case of a handset with high priority (or it takes time of waiting for retrying.once more). What solved this point is this embodiment 9, and it carries out such a control that, as to a handset with a high priority order, a time-out period is lengthened more than a handset with a low priority order. A configuration of this embodiment 9 is basically the same as Fig.2 which shows the configuration of the embodiment 1.

A setup of a time-out period to each handset is determined on the basis of the emergency reporting priority table 226. For example, in case that numerical values from 1 through 6 are allocated to priority information of 6 units of handsets, in the order from a higher priority one, by calculating a time-out period of each handset through the use of a mathematical formula of a time-out period of a handset = 60 seconds - 10 X (priority -1), a handset with priority 1 is an important handset so that a time-out period thereof can be set longer to be 60 seconds, and a handset with priority 6 is of low priority so that a time-out period thereof can be set shorter to be 10 seconds.

By carrying out a wireless communication path establishment over taking longer time for a handset with high priority under the above-described control, there are such advantages that it is possible to make it difficult to occur such a problem that communication is not carried out even in case of an important handset, and also, it does not increase time which is required for an entire emergency report needlessly, by shortening a time-out period to a handset with low priority.

### (Embodiment 10)

A cordless phone apparatus with multi-handsets, which is used in a security system which relates to an embodiment 10 of this invention, has such a function that a base unit accepts an alarm canceling request from a handset. In case that erroneous emergency situation information happened to be generated due to an operation error by a habitant, communication of an emergency report to each handset is unnecessary. Considering such a fact that, in case that communication of the erroneous emergency report was transmitted to each handset, a function of a telephone is restricted during a period which is required for the emergency report, it is desirable to stop the emergency report as quickly as possible. A configuration of the cordless phone apparatus with multi-handsets, which is used in the security system which relates to this embodiment, is basically the same as Fig. 5, but in an emergency reporting process which is carried out by a base unit, the base unit, on the occasion of reporting to each handset, accepts an alarm canceling request from the pertinent handset.

By this, in case that it can be judged that it is clearly an erroneous report, a habitant can carry out alarm canceling at the time of emergency reporting, and by. this, it becomes possible not to carry out unnecessary emergency reporting to handsets which have lower.priority than that handset.

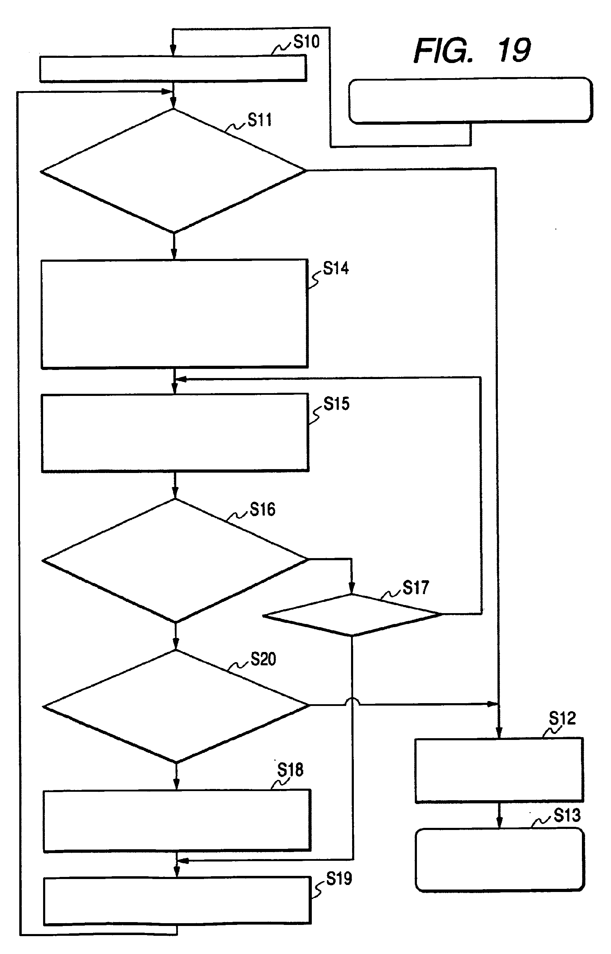

A processing procedure in the cordless phone apparatus, which is used in the security system which.relates to the embodiment 10 of this invention, is shown in Fig.19.

A basic process is the same as that which was explained in Fig. 3, but added is a process for carrying out judgment of whether there is an emergency report interrupting request or not after a wireless communication path was established (S20). The emergency report interrupting request is a signal which is sent to a base unit through a wireless communication path in accordance with an explicit operation of a habitant such as pressing a specific switch of the pertinent handset, and in case that there was this request, the process is moved to S12 in order to reset reporting completion flags of all handsets regardless of completion or non-completion of emergency reporting including the pertinent handset, and the emergency reporting process is finished (S13).

As above, according to this embodiment, there are such advantages that, when it could be judged that it is a clearly erroneous report, alarm canceling is carried out and superfluous alarm reporting is not carried out to other handsets, and thereby, it is possible to shorten restriction time of a telephone function due to unnecessary emergency reporting, and also, a unnecessary. alarm is not given to other habitants.

### (Embodiment 11)

In this embodiment 11, a cordless phone apparatus which is used in a security system has a function for reporting such a fact that an erroneous alarm was generated and the alarm was canceled, and identifiers (identifier, number, place) of a handset which sent out a canceling instruction to all handsets after the alarm was canceled.

When the generated alarm was an erroneous report, in case that an operation for alarm canceling is carried out at a certain handset and the alarm was interrupted, there is such a case that habitants other than the habitant who interrupted the alarm can not judge whether it is a normal interrupting process due to the erroneous report, or they are in such an abnormal situation that an alarm process is interrupted due to failure of an equipment etc. Also, even in case of the normal interrupting process, there is such apossibility that it is a wrongful process by an intruder etc. other than habitants. By reporting such a fact that an erroneous alarm was generated and the alarm was canceled, and information of a handset which sent out a canceling request to all handsets after the alarm was canceled, habitants of all handsets can judge whether it is a valid interrupting. process or not.

To the cordless phone apparatus with multi-handsets, which is used in the security system which relates to the embodiment of this invention, added is a function for reporting such a fact that an erroneous alarm was generated and the alarm was canceled, and identifiers (identifier, number, place) of a handset which sent out a canceling instruction to all handsets after the alarm was canceled. By this function, habitants can know such a fact that an erroneous. alarm was generated and the alarm was canceled, and there is such an advantage that they can judge whether it is a valid interrupting process or a abnormal or wrongful interruption due to failure.

### (Embodiment 12)

In this embodiment 12, a base unit informs all handsets of a status of priority setup, and each handset has a function for displaying that priority on the display part 206. By this, all habitants can take hold of priority of all handsets, and therefore, there are such advantages that they can set again in case of having set up priority which is not desired by themselves, and find and amend immediately an erroneous setup and a setup which does not meet a status of use.

In case of being designed in such a manner that priority can be arbitrarily set up at each handset, there may occur such a case that priority of a handset which is used by oneself is changed by a setup of another habitant. In the suchlike case, under such a situation that it is not possible to take hold of a habitant who is using current priority, when an emergency situation is occurred under such a situation that priority, which is different from one which is desired by a habitant, remains to be 'set up, there is such a case that reporting to a handset, to which emergency information should be communicated .primarily on a preferential basis, is delayed, but it is possible to amend a setup of priority, by realizing such a situation that it makes it possible to take 'hold of such a fact that a setup of priority does not meet a status of use, in advance.

### CROSS REFERENCE TO RELATED APPLICATION

This application is based upon and claims the benefit of priority of Japanese Patent Application No2003-170298 filed on 03/06/16, the contents of which are incorporated herein by reference in its entirety.

## Claims

1. A security system for reporting an abnormality, comprising:
a plurality of handsets, and
at least one base unit which is connected to the handsets by wireless communication,
wherein the base unit is equipped with an emergency reporting priority table including priority information for determining a communication sequence of emergency information to the plurality to the handsets at the time of occurrence of an emergency, and
an alarm message is sent from the base unit to each of the handsets according to the communication sequence determined by the emergency reporting priority table at the time of an emergency.

2. A security system for displaying an abnormality in case of having detected fire and an intruder by a sensor, comprising:
a plurality of handsets, and
at least one base unit which was connected to the handsets by wireless communication,
wherein the base unit is equipped with an emergency reporting priority table including priority information for determining a communication sequence of emergency information to the plurality of the handsets at the time of occurrence of an emergency, and
in case that an abnormality was occurred and communication of the abnormality was carried out to a predetermined emergency center and the like, the base unit displays a message which informs the abnormality on a display part of itself, and
in case that an alarm message, which shows a. content of an alarm, is converted into a wireless signal and sent to the .. handsets, the base unit sends it to each handset in the order which followed the emergency reporting priority table.

3. In the security system as set forth in Claim 2,
the emergency reporting priority table is designed in such a manner that the priority information can be set up on a timely basis in accordance with allocation sites of the handset and the like.

4. A cordless phone apparatus which can be used in a security system, having
a plurality of handsets, and
at least one base unit which was connected to the handsets by wireless communication paths,
wherein the base unit is equipped with an emergency reporting priority table including priority information for determining a communication sequence of emergency information to the plurality of the handsets at the time of occurrence of an emergency, and
on the occasion of an abnormality, in case that an alarm message, which shows a content of an alarm, is converted into a wireless signal and sent to the handsets, the base unit sends it to each handset in the order which followed the emergency reporting priority table.

5. In a cordless phone apparatus which is equipped with a plurality of handsets, and at least one base unit which was connected to the handsets by wireless communication paths
the handsets is equipped with
means for obtaining, from a charging cradle which has particular charge number information, the charge number information, and
means for transmitting the charge number information obtained, to the base unit, and
the base unit is equipped with
means for receiving the charge number information and storing it as position priority which shows more priority than a charging cradle position, into the emergency reporting priority table, and
at the'time of occurrence of an emergency, to the handset for which the priority information of the emergency reporting priority table is not set up, specified is such a position that the pertinent handset was placed, by the charging cradle to which charging was carried out in the last instance, and a priority sequence is determined in accordance with the position priority of the emergency reporting priority table.

6. In the cordless phone apparatus as set forth in Claim 5,
the base unit, on the occasion of determining an emergency reporting sequence on the basis of the position priority, which is allocation information of the handset, of the emergency reporting priority table, gives priority to a handset which is located at a dangerous allocation site, in accordance with a type of an alarm which is reported by the sensor.

7. In the cordless phone apparatus as set forth in Claim 5,
the base unit, on the occasion of determining an emergency reporting sequence on the basis of the position priority, which is allocation information of the handset, of the emergency reporting priority table, gives priority to a handset which is located at a dangerous allocation site, in accordance with such time that an alarm, which is reported by the sensor, was generated.

8. In the cordless phone apparatus as set forth in Claim 4,
the base unit, at the time of reporting an emergency to the handsets, increases reporting priority to the handsets for which the priority information of the emergency reporting priority table is not set, in accordance with a current position of a habitant by information of the sensor and the like.

9. In the cordless phone apparatus as set forth in Claim 4,
the base unit, at the time of reporting an emergency to the handsets, increases reporting priority to the handsets for which the priority information of the emergency reporting priority table is not set, in accordance with a status of a wireless communication path of the base unit and the handset.

10. In the cordless phone apparatus as set forth in Claim 4,
the base unit, at the time of reporting an emergency to the handsets, changes a priority sequence of the handset, in accordance with a status of charging to the handset.

11. In the cordless phone apparatus as set forth in claim 4,
the base unit is equipped with means for recording such final time that communication was carried out in each handset, and, to the handset for which the priority information of the emergency reporting priority table is not set, at the time of reporting an emergency to the handset, reporting is carried out in preference to the handset in which there was a call record in a predetermined period of time, in accordance with a record of final calling time between respective handsets in the emergency reporting priority table.

12. In the cordless phone apparatus as set forth in Claim 4,
the base unit controls a time-out period for establishing a wireless communication path between the base unit and the handset, on the basis of the priority informationof the emergency reporting priority table, at the time of reporting an emergency to the handset.

13. in the cordless phone apparatus as set forth in Claim 3,
the handset is equipped with means for canceling an alarm, on the occasion of having received an emergency report from the base unit, and the base unit eliminates a unnecessary alarm from the base unit to the handset with low priority, by canceling an alarm of the handset with high priority, at the time of reporting an emergency to the handset, in case that a report, which is based upon the priority information of the emergency reporting priority table, is an erroneous report, and the like.

14. In a cordless phone apparatus which is used in a security system comprising a base unit and a handset, which is connected to a security control device which detects fire and an intruder by a sensor,
the base unit is equipped with an emergency reporting priority table including a handset identifier which specifies a handset, and priority information for determining a communication sequence of emergency information with respect to each handset at the time of occurrence of an emergency, and
the handset is equipped with means for canceling an alarm, on the occasion of having received an emergency.report from the base unit, and
the base unit eliminates a unnecessary alarm from the base unit to the handset with low priority, by canceling an alarm of the handset with high priority, at the time of reporting an emergency to the handset, in case that a report, which is based upon the priority information of the emergency reporting priority table, is an erroneous report, and the like, and
in case that the alarm was canceled by the handset with high priority, the identifier of a handset which canceled the alarm is notified to all of the handsets to inform such a fact that an erroneous alarm was generated and canceled.

15. In the cordless phone apparatus as set forth in Claim 4,
the base unit notifies information of the emergency reportingpriority table to all handsets, at the time of reporting an emergency to the handset, and the handset displays information of the emergency reporting priority table together with information of other handsets.

16. A base unit of cordless phone apparatus which can be used in a security system, comprising:
a telephone line part,
a wireless part which is capable to connect with a plurality of handset,
a sound output part,
a sound input part;
a memory part,
a emergency reporting priority table held by memory part, said emergency reporting priority table including priority information for determining a communication sequence of emergency information to handset at the time of an emergency, and
an alarm message is sent to each handsets according to the communication sequence determined by the emergency reporting priority table at the time of an emergency.

17. A method of detecting and reporting an abnormality in a security system including a plurality of handsets and at least one base unit which was connected to the handsets by wireless communication paths, comprising the steps of:
producing an emergency reporting priority table including priority information for determining a communication sequence of emergency information to the plurality of the handsets at the time of occurrence of an.emergency; and
sending an alarm message showing an alarm message, to each handsets in the order which followed the emergency reporting priority table

18. A method of detecting and reporting an abnormality in a security system including a plurality of handsets and at least one base unit which was connected to the handsets by wireless communication paths, comprising the steps of:
producing an emergency reporting priority table including priority information for determining a communication sequence of emergency information to the plurality of the handsets at the time of occurrence of an emergency;
displaying a message informing the abnormalit on a display part of the base unit in case that an abnormality was occurred and communication of the abnormality was carried out to a predetermined emergency center; and
converting an alarm message showing a content of an alarm into a wireless signal and sending the wireless signal to each handsets in the order which followed the emergency reporting priority table.
